# EUROPEAN PATENT APPLICATION

(11) **EP 4 696 429 A1**
(43) Date of publication of application: **18.02.2026**
(21) Application number: 24194940.3
(22) Date of filing: 16.08.2024
(51) Int. Cl.: B21D 5/02, B21D 43/10, B25J 9/00

(54) **COMBINATION OF A PRESS BRAKE AND A SERIAL MANIPULATOR**

(71) Applicant: Nivora IP B.V., 7241 CW Lochem (NL)
(72) Inventor: Roodink, Sander, 7245 CA Laren (NL)
(74) Representative: 't Jong, Bastiaan Jacob

(57) **Abstract**

The invention relates to a combination of a press brake and a serial manipulator having at least six joints,
wherein the press brake comprises:
- a frame arranged on a base surface;
- two beams for clamping press brake tools, said beams being arranged in the frame and being movable towards to and away from each other in a direction perpendicular to the base surface;

wherein the serial manipulator comprises a base, having a main plane, on which a first joint of the serial manipulator is arranged, which first joint is rotatable around a first axis (Jl) perpendicular to the main plane;
wherein the serial manipulator is arranged at a distance from the press brake; and
wherein the first axis (Jl) of the serial manipulator is tilted towards the press brake.

## Description

The invention relates to a combination of a press brake and a serial manipulator having at least six joints,
wherein the press brake comprises:
   - a frame arranged on a base surface;
   - two beams for clamping press brake tools, said beams being arranged in the frame and being movable towards to and away from each other in a direction perpendicular to the base surface;
wherein the serial manipulator comprises a base, having a main plane, on which a first joint of the serial manipulator is arranged, which first joint is rotatable around a first axis (J1) perpendicular to the main plane;
wherein the serial manipulator is arranged at a distance from the press brake.

Such a combination is generally known.

When designing a combination according to the prior art, a number of constraints need to be taken into account. For example the accuracy of the serial manipulator needs to be sufficient when positioning sheet material into the press brake. Also the reach of the serial manipulator needs to be sufficient such that the serial manipulator can pick up sheet material from a stock position, positioning the sheet material in the press brake and then put down the folded sheet material at a second position. It is furthermore desired that the serial manipulator can automatically exchange tools by accessing a tool storage station.

In order to comply with these constraints, one would select a sufficient large serial manipulator. However, it is also desired to keep costs of a combination according to the prior art low. If one would select a serial manipulator of which the working space only just matches the boundaries of the press brake, stock position and tool storage station, the speed of the serial manipulator could be reduced substantially, which is also undesired.

When a serial manipulator is moved to a position at the edges of its work space, there is a substantial chance on a robot singularity. A robot singularity is a configuration in which the tool head becomes blocked in certain directions. A robot singularity could thus prevent the tool head to be positioned correctly. Furthermore, moving the tool head near the boundaries of the work space, also reduces speed and accuracy of the serial manipulator.

It is an object of the invention to reduce the above mentioned disadvantages.

This object is achieved according to the invention with a combination according to the preamble, which is characterized in that the first axis (J1) of the serial manipulator is tilted towards the press brake.

By tilting the first axis towards the press brake, the reach in the direction of the press brake is increased. This allows for the serial manipulator to maintain a more compact configuration when positioning sheet material in the press brake. At a compact configuration the serial manipulator can obtain a higher accuracy than when the serial manipulator needs to reach far and needs to adopt a long configuration.

In addition the tilting of the first axis allows for the underarm of the serial manipulator to be kept low and under the sheet material work piece, when manipulated in the press brake.

At the opposite side of the serial manipulator compared to the press brake, the serial manipulator can reach higher due to the tilted first axis. This allows for stacking finished work pieces higher or to use a higher tool storage station compared to prior art, in which the first axis is perpendicular to the base surface.

In a preferred embodiment of the combination according to the invention the angle of the first axis (J1) with the base surface is between 45° and 90°, is more preferably between 65° and 75°, is even more preferred 70°.

At an angle of 70° an optimum is achieved for 6 axis serial manipulators typically used with press brakes between the reach in a compact configuration and the reach in a long configuration.

In yet another preferred embodiment the first axis (J1) of the serial manipulator is tilted in a tilting plane perpendicular to the base surface and perpendicular to the longitudinal direction of the beams of the press brake.

Although, the tilting plane could be under another angle than perpendicular for specific applications, using a perpendicular angle will ensure that the press brake can be used optimally over the full length of the beams.

It is furthermore preferred if the tilting plane intersects the center of the beams of the press brake.

Yet another embodiment of the combination according to the invention further comprises a tool storage station for storage of press brake tools, which tool storage station is arranged parallel to the press brake with the serial manipulator between the press brake and the storage station, wherein the angle between the mechanical end position of the first axis (J1) of the serial manipulator and a line perpendicular to the storage station and through the first axis (J1) is between 30° and 60°, and is preferably 45°.

Having the tool storage station at the opposite side of the serial manipulator compared to the press brake, allows for the extended height of the tilted serial manipulator to be used to the full extend. Typically, the cables of a serial manipulator will exit at the back of the base of the serial manipulator. At the position of the cables, there is typically a mechanical end position for the rotation around the first axis. This would limit the ability of the serial manipulator to quickly change tools at the tool storage station and may require the serial manipulator to make a full rotation around the first axis to move from one side of the tool storage station to the other side of the tool storage station.

By rotating the base of the serial manipulator, such that the angle between the mechanical end position of the first axis (J1) of the serial manipulator and a line perpendicular to the storage station and through the first axis (J1) is between 30° and 60°, and is preferably 45°, the mechanical end position will no longer limit the movement of the serial manipulator for the tool storage station.

These and other features will be elucidated in conjunction with the accompanying drawings.
Figure 1 shows a side view of a first embodiment of a combination according to the invention.
Figure 2 shows the work space of the serial manipulator for two different angles.
Figure 3 shows a side view of a second embodiment of a combination according to the invention.
Figure 4 shows a top view of the second embodiment of figure 3.

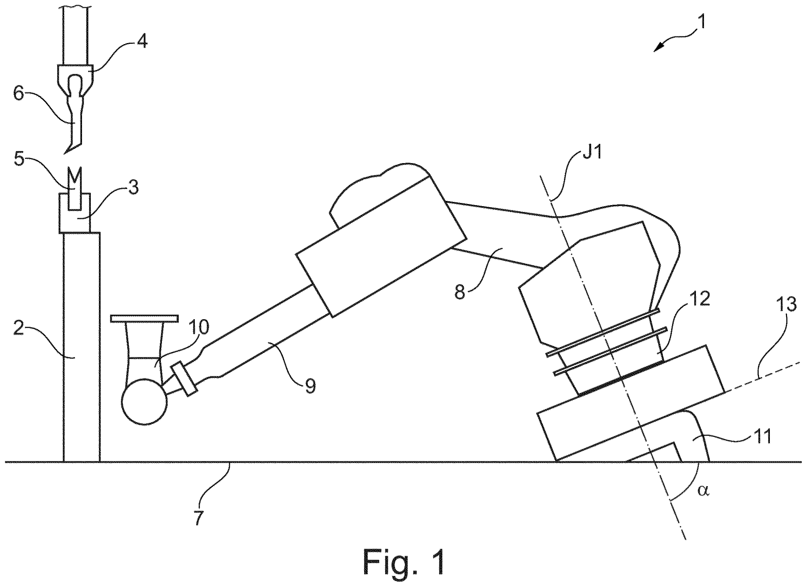

Figure 1 shows a side view of a first embodiment 1 of the combination according to the invention. The combination 1 has a press brake with a frame 2 and two beams 3, 4 in which tools 5, 6 are arranged. The frame 2 of the press brake is arranged on a base surface 7.

The combination 1 further has a serial manipulator with two links 8, 9 and a gripper 10 for gripping a tool with which sheet material or a press brake tool can be gripped. The two links 8, 9 and gripper 10 are connected by joints and mounted to a base 11 via the main plane 13 of a first joint 12 having a first axis J1.

The first axis J1 makes an angle α with the base surface 7 of 70°, such that the first axis J1 is tilted towards the press brake 2 - 6.

As shown in figure 1, the underarm 9 of the serial manipulator can be kept low due to the tilted first axis J1 and under the lower beam 3 of the press brake.

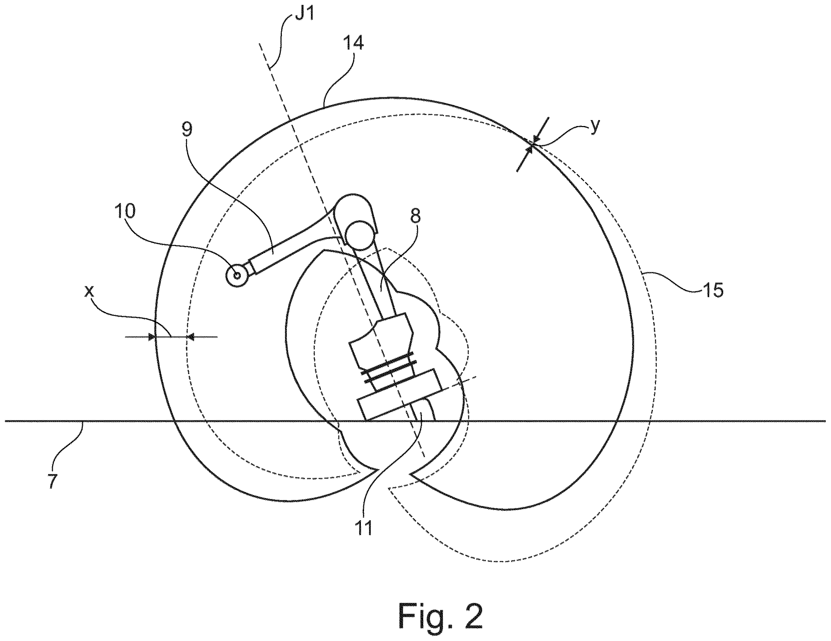

Figure 2 shows the difference of the work space 14 of the serial manipulator 8, 9, 10 compared to the work space 15 of a serial manipulator in which the first axis is perpendicular to the base surface 7. The left side of the work space shown in the figure is the reach the manipulator 8, 9, 10 has in the compact configuration, while the right side of space shown in the figure is the reach of the manipulator in the long configuration, for the shown rotational position around the first axis J1.

Due to the tilted first axis J1, the serial manipulator 8, 9, 10 can reach further over a distance x in horizontal position compared to a serial manipulator having a first axis perpendicular to the base surface 7. The maximal height difference y of the reach on the opposite side is however small.

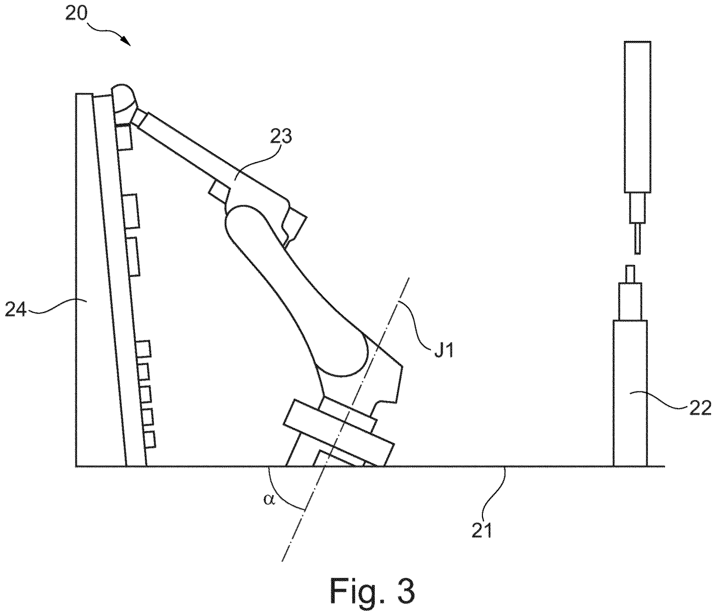

Figure 3 shows a second embodiment of a combination 20 according to the invention. The combination 20 has a base surface 21, a press brake 22, a serial manipulator 23 and a tool storage station 24. As explained in relation to figure 2, the tilted first axis J1 of the serial manipulator 23 does not negatively affect the maximal height which allows the serial manipulator 23 to still reach the top of the tool storage station 24. The angle α of the first axis J1 being tilted towards the press brake 22 increases the horizontal reach of the serial manipulator in compact configuration, such that sheet material work pieces can be handled in the press brake with high accuracy and speed.

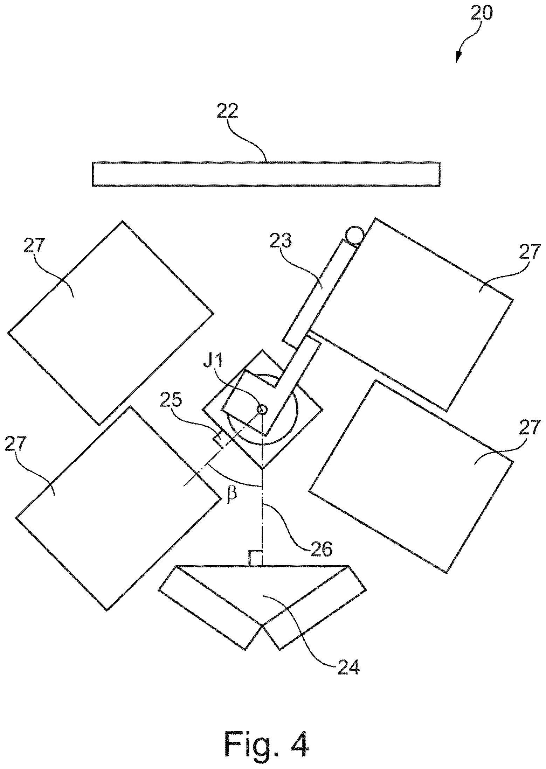

Figure 4 shows a top view of the combination 20 of figure 3. The tool storage station 24 is arranged parallel to the press brake 22 and the serial manipulator 23 is position in between the press brake 22 and the storage station 24.

The first axis J1 of the serial manipulator 23 typically has a mechanical end position 25 to prevent damage to cables exiting the serial manipulator 23 from the base. The angle β between the mechanical end position 25 of the first axis J1 of the serial manipulator 23 and a line 26 perpendicular to the tool storage station 24 and through the first axis (J1) is 45°. This allows for the serial manipulator 23 to quickly change tools at the tool storage station 24 without having to make a full rotation due to the mechanical end position 25.

The combination 20 has furthermore four pallet positions 27 at which pallets with sheet material can be positioned or at which pallets can be positioned for processed work pieces.

## Claims

1. Combination of a press brake and a serial manipulator having at least six joints,
wherein the press brake comprises:
- a frame arranged on a base surface;
- two beams for clamping press brake tools, said beams being arranged in the frame and being movable towards to and away from each other in a direction perpendicular to the base surface;
wherein the serial manipulator comprises a base, having a main plane, on which a first joint of the serial manipulator is arranged, which first joint is rotatable around a first axis (J1) perpendicular to the main plane;
wherein the serial manipulator is arranged at a distance from the press brake
**characterized in that**
the first axis (J1) of the serial manipulator is tilted towards the press brake.

2. Combination according to claim 1, wherein the angle of the first axis (J1) with the base surface is between 45° and 90°, is more preferably between 65° and 75°, is even more preferred 70°.

3. Combination according to claim 1 or 2, wherein the first axis (J1) of the serial manipulator is tilted in a tilting plane perpendicular to the base surface and perpendicular to the longitudinal direction of the beams of the press brake.

4. Combination according to claim 3, wherein the tilting plane intersects the center of the beams of the press brake.

5. Combination according to any of the preceding claims, further comprising a tool storage station for storage of press brake tools, which tool storage station is arranged parallel to the press brake with the serial manipulator between the press brake and the tool storage station, wherein the angle between the mechanical end position of the first axis (J1) of the serial manipulator and a line perpendicular to the tool storage station and through the first axis (J1) is between 30° and 60°, and is preferably 45°.
